# EUROPÄISCHE PATENTANMELDUNG

(11) **EP 4 534 287 A1**
(43) Veröffentlichungstag der Anmeldung: **09.04.2025**
(21) Anmeldenummer: 24204829.6
(22) Anmeldetag: 04.10.2024
(51) Int. Cl.: B32B 27/08, B32B 27/18, B32B 27/20, B32B 27/22

(54) **MEHRSCHICHTIGE KUNSTSTOFFFOLIE EIN REZYKLIERTES KLEBERBESCHICHTETES FOLIENMATERIAL AUFWEISEND, VERFAHREN ZU DEREN HERSTELLUNG SOWIE DEREN VERWENDUNG**

(30) Priorität: 05.10.2023 DE 102023127198
(71) Anmelder: Policycle Deutschland GmbH, 06369 Südliches Anhalt OT Weißandt-Gölzau (DE)
(72) Erfinder: Amler, Tino, 06369 Südliches Anhalt OT Weißandt-Gölzau (DE); Koll, Michael, 53639 Königswinter (DE)
(74) Vertreter: ETL IP Patent- und Rechtsanwaltsgesellschaft mbH

(57) **Zusammenfassung**

Um kleberbeschichtete Folienabfälle für eine energieeffiziente Folienherstellung nutzbar zu machen, wird eine mehrschichtige Kunststofffolie, Kunststoffrezyklat aufweisend vorgeschlagen, wobei die Kunststofffolie (1) einen Schichtverbund von mindestens drei miteinander koextrudierten Folienschichten umfasst, wobei die Kunststofffolie (1) eine erste äußere Folienschicht (1a) und eine zweite äußere Folienschicht (1b) und mindestens eine zwischen der ersten äußeren Folienschicht (1a) und der zweiten äußeren Folienschicht (1b) angeordnete Innenschicht (1c) umfasst, wobei die mindestens eine Innenschicht (1c) ein Kunststoffrezyklat aus kleberbeschichteten Folienmaterial aufweist.

Zudem werden ein Verfahren zur Herstellung der Kunststofffolie und deren Verwendung offenbart.

## Beschreibung

Die Erfindung betrifft eine mehrschichtige Kunststofffolie, Kunststoffrezyklat aufweisend, wobei die Kunststofffolie einen Schichtverbund von mindestens drei miteinander koextrudierten Folienschichten umfasst, wobei die Kunststofffolie eine erste äußere Folienschicht und eine zweite äußere Folienschicht und mindestens eine zwischen der ersten äußeren Folienschicht und der zweiten äußeren Folienschicht angeordnete Innenschicht umfasst, ein Verfahren zur Herstellung der mehrschichtigen Kunststofffolie und deren Verwendung,

Die stoffliche Verwertung von Kunststoffabfällen und der Einsatz von Rezyklaten in Kunststoffprodukten leistet einen wichtigen Beitrag zur Kreislaufwirtschaft, verringert die Abhängigkeit von fossilen Rohstoffen sowie die CO₂-Emissionen bei ihrer Herstellung. Unter den Bedingungen der Klimaneutralität, welche die EU für das Jahr 2050 anstrebt, können hochwertige Rezyklate einen wesentlichen Beitrag zur Sicherung der Rohstoffversorgung für die Kunststoffindustrie leisten.

Im europäischen Recht ist der Begriff Rezyklat nicht gesetzlich definiert. Daher hat der deutsche Gesetzgeber selbst im Jahr 2020 den Begriff "Rezyklate" definiert als "sekundäre Rohstoffe, die durch die Verwertung von Abfällen gewonnen worden sind oder bei der Beseitigung von Abfällen anfallen und für die Herstellung von Erzeugnissen geeignet sind.

Entsprechend der Herkunft aus unterschiedlichen Abfallströmen wird in der Praxis und in der Normung zwischen recyceltem Material aus sog. Post-Consumer-Abfällen und aus sog. Pre-Consumer-Abfällen (synonym: Post-Industrial-Abfällen) unterschieden (vgl. z. B. DIN EN ISO 14021).

Von sog. Post-Consumer-Abfällen spricht man bei Material aus Haushalten, gewerblichen und industriellen Einrichtungen, die Endverbraucher des Produktes sind, das nicht mehr länger für den vorgesehenen Zweck verwendet werden kann. Darin enthalten ist auch zurückgeführtes Material aus der Lieferkette. Bekanntestes Beispiel für eine Quelle von Post-Consumer Abfällen ist der gelbe Sack. Fällt der Abfall im industriellen und gewerblichen Bereich an, wird er ebenfalls zum Post-Consumer Abfall gezählt, sofern die Industrie das Produkt als Endkunde verwendet hat.

Nach der Sortierung werden die Kunststoffabfälle gereinigt und zerkleinert. Das so entstandene Rezyklat kann in Form von sogenannten Flakes (auch Fluff, Flocken oder Mahlgut genannt) verwendet werden, wird aber meist anschließend durch Umschmelzen in Granulatform gebracht (Regranulat/Regenerat), um sie für die Weiterverarbeitung vorzubereiten. Das Granulat kann dann für die Herstellung neuer Kunststoffprodukte verwendet werden.

Die Vermeidung von Produktions- und Verarbeitungsrückständen hat für das produzierende Gewerbe schon lange Priorität. Laufend werden die Prozesse verbessert, um den Ausschuss so gering wie möglich zu halten. Allerdings sind bei den Formgebungsverfahren für Kunststoffprodukte Produktionsrückstände in gewissem Umfang unvermeidbar. Kunststoffabfälle, die beim industriellen Herstellungsprozess anfallen, werden als sog. Post-Industrial-Abfälle, wie bereits ausgeführt, bezeichnet.

Produktionsabfälle fallen in der Regel sortenrein an und werden separat gesammelt. Diese Abfälle werden in der Regel ebenfalls einem Recycling- und Umschmelzprozess zugeführt, dessen Ausgangsprodukt ein Granulat (Regenerat oder Regranulat) ist, um dann erneut im Herstellungsprozess wiederverwendet zu werden.

Für Rezyklate aus Post-Consumer-Abfällen hat sich Abkürzung PCR (Post-Consumer-Rezyklat) und für Rezyklate aus Post-Industrial-Abfällen die Bezeichnung PIR (Post-Industrial-Rezyklat) durchgesetzt.

Heutzutage spielen Klebstoffe bei der Herstellung fast aller Güter, insbesondere bei Massenartikeln, eine entscheidende Rolle. Insbesondere stellen Ausgangsmaterialien mit einem Kleberanteil, wie sie z.B. aus der Oberflächenschutzfolien- oder Etikettenherstellung kommen, ein großes Problem beim Recycling dar. Diese Materialien lassen sich aufgrund der in der Regel stark unterschiedlichen Materialeigenschaften und Verträglichkeiten zwischen Kleberschicht und Kunststoffträger sowie ihrer Neigung zur Verklebung schlecht oder gar nicht zu Granulaten verarbeiten. Diese Abfälle werden daher in der Regel einer Entsorgung durch Verbrennung zu geführt.

Kleber bereiten Probleme beim Kunststoffrecycling, weil sie aufgrund ihrer abweichenden Eigenschaften die Qualität des recycelten Kunststoffs beeinträchtigen können, d.h. sie wirken als Störstoffe im Recyclingprozess, wenn sie nicht durch aufwendige (meist unwirtschaftliche) Wasch- und Lösungsverfahren vom Kunststoff abgetrennt werden. Diese Verunreinigung durch Kleberanhaftungen beeinflusst die Eigenschaften des recycelten Kunststoffs negativ, wie zum Beispiel die Festigkeit, Haltbarkeit oder Farbe. Darüber hinaus können Kleber auch die Komponenten der Recyclinganlagen verstopfen oder beschädigen, was zu Produktionsausfällen und zusätzlichen Kosten führen kann. Aus diesen Gründen ist es wichtig, dass nach dem Stand der Technik Kunststoffe vor dem Recycling von Kleberresten befreit werden.

Nachteilhaft bei den bekannten Lösungen ist insbesondere, dass das Material zunächst gewaschen, zerkleinert, verschmolzen und granuliert werden muss, bevor es im nächsten Schritt zu einer Folie extrudiert werden kann. Diese erforderlichen Prozessschritte führen zu einem erhöhten Energieverbrauch, was die Nachhaltigkeit und die Kosten der Folienherstellung negativ beeinflusst. Zudem beeinflusst natürlich auch die Granulierung die Eigenschaften des Recycling-Produkts, da dieser Granulierungsvorgang eine zusätzliche thermische und mechanische Beanspruchung der Polymerketten im Material darstellt und u.A. Einfluss auf die Kettenlänge des Polymers hat. Dies bedeutet, dass ein Rezyklat, das vor der Extrusion und der Verarbeitung zu einem neuen Produkt einer zusätzlichen Granulierung unterzogen wird, im Gegensatz zu direkt einem Extruder zugeführtem Folienresten oder dergleichen veränderte und auch nachteilige Produkteigenschaften aufweist.

Die WO 2023/116 984 A1 beschreibt eine Blasfolienanlage sowie ein Verfahren zur Herstellung von Blasfolien, in dem die Verwendung von Granulaten nicht erforderlich ist, sondern zerkleinerte Folienschnipsel (sog. Fluff) als Ausgangsmaterial dienen. Hauptmerkmal der Blasfolienanlage und des Verfahrens ist die Verwendung eines Doppelschneckenextruders, der die Verwendung des "Fluff" ermöglicht.

Es ist daher Aufgabe der vorliegenden Erfindung, kleberbeschichtete Folienabfälle für eine energieeffiziente Folienherstellung nutzbar zu machen.

Diese Aufgabe wird gelöst durch eine mehrschichtige Kunststofffolie, ein Verfahren zu deren Herstellung sowie deren Verwendung mit den Merkmalen der unabhängigen Ansprüche.

Erfindungsgemäß wird eine mehrschichtige Kunststofffolie, auf Basis von Kunststoffrezyklat (Recyclingkunststoff) bereitgestellt, wobei die Kunststofffolie einen Schichtverbund von mindestens drei miteinander koextrudierten Folienschichten umfasst,
wobei die Kunststofffolie eine erste äußere Folienschicht und eine zweite äußere Folienschicht und eine zwischen der ersten äußeren Folienschicht und der zweiten äußeren Folienschicht angeordnete Innenschicht umfasst, und
wobei die mindestens eine Innenschicht ein Kunststoffrezyklat aus kleberbeschichtetem Folienmaterial aufweist.

Erfindungsgemäß ist die mehrschichtige Kunststofffolie eine koextrudierte Cast- oder Blasfolie.

Kunststoffrezyklat aus kleberbeschichteten Folienmaterial haben, wie bereits ausgeführt, den Nachteil, dass sich zum einen der Kleber nicht vollständig entfernen lässt und zum anderen sich die Produkteigenschaften durch die entsprechenden Behandlungen verändern. Diese Nachteile werden durch die erfindungsgemäße Kunststofffolie vermieden, da durch die Verwendung des kleberhaltigen Rezyklats als Innenschicht, die nachteiligen Eigenschaften nicht zum Tragen kommen bzw. von den äußeren Folienschichten kompensiert werden.

Erfindungsgemäß kann für die Herstellung der erfindungsgemäßen Kunststofffolie direkt das kleberbeschichtete Folienmaterial in geschredderter Form auch als sogenannte Flakes oder Fluff, Flocken oder Mahlgut eingesetzt werden und/oder auch Granulate oder Pellets, die aus diesem Folienmaterial hergestellt sind, wobei bei Verwendung von Granulaten oder Pellets vorzugsweise Antihaftmittel zugefügt werden, um Verklumpungen zu verhindern.

Die Eigenschaften einer Mehrschichtfolie, enthaltend mindestens eine Innenschicht gefertigt aus kleberbeschichteten Folienabfällen (z.B. LDPE-Folie) mit Naturkautschuk als Kleberkomponente, zeigt gleiche oder sogar verbesserte mechanische Eigenschaften hinsichtlich einer Folie mit einer Innenschicht aus kleberfreiem gleichem Material (z.B. LDPE).

Zugfestigkeit, Dehnung und Zugspannung entsprechen bei einer Folie mit einer Innenschicht gefertigt aus kleberbeschichteten Folienabfällen mit einem Kleber auf Basis von Naturkautschuk als Kleber denen einer Folie, bei der kleberfreies Material in der Innenschicht vorliegt.

Insbesondere die Schlagzähigkeit und dynamische Weiterreißfestigkeit, durch Dart Drop- und Elmendorf- Messungen ermittelt, zeigen vergleichbare oder verbesserte Werte. Eine gute Schlagzähfestigkeit ist in Anwendungen vorteilhaft, in denen eine besondere dynamische Beanspruchung auftritt, darunter das Befüllen von Säcken oder Beuteln (z.B. Müllsäcke), das Entfernen von Oberflächenschutzfolien oder den Schutz von Gütern durch schlagartige mechanische Einwirkung.

Weitere Anwendungen von Folien, in denen eine gute Schlagfestigkeit erforderlich ist, sind: Baufolien: Folien werden auch im Bauwesen eingesetzt, z. B. als Dampfsperren oder als Schutzfolien für Fenster oder Böden. Eine gute Schlagfestigkeit ist erforderlich, um sicherzustellen, dass die Folien den Belastungen während der Bauarbeiten standhalten und nicht leicht reißen oder brechen.

Automotive-Folien: In der Automobilindustrie werden Folien für verschiedene Anwendungen eingesetzt, z. B. für Scheibenfolien, Schutzfolien für Karosserieteile oder Innenraumverkleidungen. Eine gute Schlagfestigkeit ist wichtig, um sicherzustellen, dass die Folien den Anforderungen im Straßenverkehr bzw. beim Entfernen nach Gebrauch standhalten und nicht leicht beschädigt werden.

Industrielle Folien: In der Industrie werden Folien für verschiedene Anwendungen eingesetzt, z. B. als Schutzfolien für Maschinen oder als Verpackungsmaterial für industrielle Produkte. Eine gute Schlagfestigkeit ist erforderlich, um sicherzustellen, dass die Folien den Belastungen in industriellen Umgebungen standhalten und nicht leicht brechen oder reißen, insbesondere auch beim Abziehen nach der Erfüllung der Schutzfunktion.

Landwirtschaftliche Folien: In der Landwirtschaft werden Folien für verschiedene Zwecke eingesetzt, z. B. als Abdeckungen für Gewächshäuser oder als Schutzfolien für Silage. Eine gute Schlagfestigkeit ist wichtig, um sicherzustellen, dass die Folien den Witterungsbedingungen standhalten und nicht leicht beschädigt werden.

Bevorzugt werden die erfindungsgemäßen Kunststofffolien mit mindestens 3 Schichten, bevorzugt mit bis zu Schichten hergestellt. Bei Kunststofffolien mit mehr als 3 Schichten können die zusätzlichen Schichten spezifische Funktionalitäten aufweisen, wie beispielsweise eine Haftvermittlerschicht zwischen der Innenschicht und den äußeren Folienschichten. Zudem ermöglichen die unterschiedlichen Schichten, spezifische Eigenschaften zu kombinieren und an den Anwendungsfall maßgeschneidert anzupassen, wie z.B. Flexibilität, Festigkeit und Barriereeigenschaften gegen Feuchtigkeit, Gase oder migrierende Substanzen. Weiterhin können durch die Schichtung auch die Haltbarkeit und die Beständigkeit gegenüber UV-Strahlung oder Chemikalien verbessert werden.

Dabei können die äußeren Schichten in mehrere Schichten aufgeteilt sein. Diese Schichten weisen bei Zuordnung zu den äußeren Schichten keinen Klebstoff auf, können ansonsten aber jeweils unterschiedliche Eigenschaften und Zusammensetzungen aufweisen. Ansonsten kann eine Mehrzahl von Innenschichten vorliegen, die gemeinsam haben, Klebstoff aufzuweisen. Davon abgesehen können die verschiedenen Innenschichten jeweils unterschiedliche Eigenschaften und damit Zusammensetzungen aufweisen.

Bevorzugt sind die erste äußere Folienschicht und die zweite äußere Folienschicht frei von Kunststoffrezyklat aus kleberbeschichteten Folienmaterial, damit die vorgenannten Vorteile vollumfänglich zum Tragen kommen.

Die Innenschicht weist vorzugsweise einen Anteil des Klebers im Kunststoffrezyklat aus kleberbeschichteten Folienmaterial im Bereich von 0,5 Gew. % bis 55 Gew. %, vorzugsweise von 5 Gew. % bis 50 Gew. % auf, so dass vorteilhafterweise sämtlich bekannte mit Kleber beschichtete Folienmaterialien in der erfindungsgemäßen Kunststofffolie verwertet werden können.

Die Kunststofffolie weist bevorzugt insgesamt einen Kunststoffrezyklat-Anteil einschließlich des Kunststoffrezyklats aus kleberbeschichteten Folienmaterial von mindestens 80 Gew.-% bis zu 97 Gew.-%, vorzugsweise von 90 Gew.-% auf, so dass neben einem möglichst hohen Einsatz von Recyclingmaterialien auch gesetzliche Vorgaben für die Vergabe von Umweltzeichen erfüllt werden können (z.B. "Blauer Engel"), die auch aus wirtschaftlichen Gründen bedeutsam sind.

Mit dieser Art von Kunststofffolie können Kunststoffrezyklate aus kleberbeschichtetem Folienmaterial vorteilhafterweise mit allen bekannten Klebstoffen recycelt werden. Dies können beispielsweise Klebstoffe auf Basis von Naturkautschuk, Acrylat, Polyurethan, Silikon, sowie natürliche oder biobasierte Klebstoffe, sowie Klebstoffe auf Basis von Polyvinylacetat oder Vinylacetat-Ethylen oder Hot-Melt-Kleber und/oder deren Mischungen sein.

Die eingesetzten Kunststoffrezyklate stammen nach einer Ausführungsform bevorzugt teilweise oder vollständig aus Post-Consumer Abfällen.

Dabei kann vorteilhafterweise der Anteil das Folienmaterials mit einem Kleber auf Basis von Naturkautschuk in der Innenschicht bis zu 100 % betragen.

Ebenfalls vorteilhafterweise kann der Anteil das Folienmaterials mit einem Kleber auf Basis von anderen Klebern als Naturkautschuk in der Innenschicht bis zu 100 % betragen, was in Anbetracht der sehr unterschiedlichen Klebstoffe ein sehr hoher Anteil ist.

Aufgrund des positiven Einflusses des kleberbeschichteten Folienmaterials, enthaltend Naturkautschukkleber, in der Innenschicht, ist es möglich, auch andere kleberbeschichtete Folienabfälle, enthaltend einen Klebstoff z.B. auf Basis von Acrylat oder Urethan in der Innenschicht mit einem Anteil der Folienabfälle von bis zu 50 Gew.-%, insbesondere 1-30 Gew.-% zu verwenden. Bisher können diese Abfälle ebenfalls schlecht rezykliert werden, sondern müssen in der Regel ebenfalls einer thermischen Verwertung zugeführt werden.

Bei der erfindungsgemäßen Kunststofffolie weisen vorzugsweise eine oder beide Außenschichten granuliertes Rezyklat oder geschreddertes Folienmaterial als Rezyklat auf, wobei diese bevorzugt nicht Klebstoff-haltig sind.

Nach einer besonderen Ausführungsform der erfindungsgemäßen Folie weisen eine oder beide Außenschichten, wobei die Außenschichten aus zumindest zwei Schichten bestehen können, Kunststoffrezyklat aus kleberbeschichtetem Folienmaterial auf, da bei verschiedenen Folien ein gewisser Klebeeffekt auf zumindest einer der beiden Außenseiten gewünscht und von Vorteil ist. Vorzugsweise weisen dazu eine oder beide Außenschichten 0,1-20 Gew.-%, besonders bevorzugt 0,5-10 Gew.-% klebstoffhaltige Folienabfälle auf

Die Schichtdickenverhältnisvon erster äußerer Folienschicht / der mindestens einen Innenschicht / zweiter äußerer Folienschicht variieren vorzugsweise im Bereich von 5 - 45 : 10 - 90 : 5 - 45, bevorzugt im Bereich von 10 - 30 : 40 - 70 : 10 - 30.

Asymmetrische Schichtdickenverhältnisse sind erfindungsgemäß ebenfalls möglich und in den vorab angegebenen bevorzugten Schichtdickenverhältnissen mit umfasst.

Die Kunststofffolie weist vorzugsweise einen (Gesamt-)Kunststoffanteil im Bereich von mindestens 80 Gew.-% auf.

Vorzugsweise weist die erfindungsgemäße Kunststofffolie zumindest im Wesentlichen nur eine (einzige) Kunststoffsorte, insbesondere nur eine (einzige) Kunststoffsorte gemäß DIN EN ISO 11469, auf.

In diesem Zusammenhang ist es bevorzugt, wenn die erfindungsgemäße Kunststofffolie außer dem Kunststoffrezyklat zumindest im Wesentlichen nur Inhaltsstoffe aus der Gruppe von Füllstoffen, Farbstoffen, Farbpigmenten, Duftstoffen, Antiblockmitteln, Gleitmitteln, Verarbeitungs- und/oder Lichtstabilisatoren, Plastifizierungsmitteln und Weichmachern, Bindemitteln, Primärkunststoffen der gleichen Kunststoffsorte, vorzugsweise gemäß DIN EN ISO 11469 wie das Kunststoffrezyklat, sowie deren Mischungen und Kombinationen aufweist.

Deren Anteile können im Bereich von 0,1 Gew.-% bis 30 Gew.-% bezogen auf die Kunststofffolie liegen.

Eine besonders bevorzugte Ausführungsform der mehrschichtigen Kunststofffolie weist folgende Merkmale auf, wobei die nachfolgenden Gewichtsprozentangaben jeweils auf die Kunststofffolie bezogen sind und derart zu kombinieren und/oder auszuwählen sind, dass 100 Gew.-% resultieren:
- geschreddertes und/oder granuliertes Kunststoffrezyklat in Mengen im Bereich von 80 Gew.-% bis 95 Gew.-%,
- optional Primärkunststoff(e) der gleichen Kunststoffsorte im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%;
- Inhaltsstoffe, ausgewählt aus der Gruppe von Füllstoffen, Farbstoffen, Farbpigmenten, Duftstoffen, Antiblockmitteln, Gleitmitteln, Verarbeitungs- und/oder Lichtstabilisatoren, Plastifizierungsmitteln und Weichmachern, Bindemitteln, Hilfsstoffen und Additiven sowie deren Mischungen und Kombinationen, in Mengen im Bereich von vorzugsweise 0,1 Gew.-% bis 20 Gew.%.

Die Schichtdicke der erfindungsgemäßen Kunststofffolie kann in breiten Bereichen variieren: Insbesondere kann die erfindungsgemäße Kunststofffolie eine Schichtdicke im Bereich von 15 µm bis 500 µm, insbesondere im Bereich von 30 µm bis 200 µm, aufweisen, wobei die Standardicken im Bereich von Kunststofffolien damit umfasst sind.

Die Schichtdicke der erfindungsgemäßen Kunststofffolie kann vorteilhafterweise in breiten Bereichen variieren und ist daher besonders gut an ihre entsprechende Anwendung anpassbar. Insbesondere sind die mechanischen Eigenschaften, wie beispielsweise Zugfestigkeit, Reißdehnung und dynamische Durchstoßfestigkeit, abhängig von der entsprechenden Schichtdicke. Darüber hinaus verändern sich aber auch die Verarbeitbarkeit und die Stabilität mit der Schichtdicke. Insbesondere bei der Verwendung der erfindungsgemäßen Kunststofffolie als Verpackungsmaterial können unterschiedliche Anforderungen (je nach zu verpackendem Gut bzw. zu verpackender Ware) vorliegen, sodass die Kunststofffolie entsprechend ihrem Einsatz angepasst werden muss.

Bei dem Recyclingmaterial handelt es sich bevorzugt um einen Kunststoff oder eine Mischung aus Kunststoffen, besonders bevorzugt um ein Kunststoff oder eine Mischung aus Kunststoffen aus der Gruppe mit Polymerisaten, Polykondensaten wie Polyethylene (LDPE, LLDPE, mLLDPE, HDPE, MDPE, VLDPE, etc.), Polypropylene (Homo- und Copolymere, Compounds), Plastomere, lonomere, Ethylen-Copolymerisate (EVA, EVOH, EPM/EPDM, EMMA, EAA, EEA, CPE, etc.), Cycloolefin-Copolymere, Polyamide (PA 6, PA 66, PA 6/66, PA 11, etc.), Thermoplastische Elastomere (TPE-E, TPE-O, TPU), Terephtalate ( Polyethylenterephthalat (PET), Polybuthylenterephtalat (PBT)), Polyisobutylen (PIB), Polystyrol PS), biobasierte Kunststoffe und bioabbaubare Kunststoffe (PLA, PHA, TPS, PCL, PBAT, PBS).

Vorzugsweise weist die erfindungsgemäße Kunststofffolie zumindest im Wesentlichen nur eine (einzige) Kunststoffsorte, insbesondere nur eine (einzige) Kunststoffsorte gemäß DIN EN ISO 11469, auf,.um vorteilhafterweise ein erneutes Recycling zu vereinfachen.

In diesem Zusammenhang ist es bevorzugt, wenn die erfindungsgemäße Kunststofffolie außer dem Kunststoffrezyklat zumindest im Wesentlichen nur Inhaltsstoffe aus der Gruppe von Füllstoffen, Farbstoffen, Farbpigmenten, Duftstoffen, Antiblockmitteln, Gleitmitteln, Verarbeitungs- und/oder Lichtstabilisatoren, Plastifizierungsmitteln und Weichmachern, Bindemitteln, Primärkunststoffen der gleichen Kunststoffsorte, insbesondere gemäß DIN EN ISO 11469 wie das Kunststoffrezyklat, sowie deren Mischungen und Kombinationen aufweist.

Die Folienschichten weisen bevorzugt jeweils ein Kunststoffrezyklat auf Basis von Polyolefinrezyklat auf, wobei die Folienschichten vorzugsweise jeweils einen Kunststoffrezyklat-Anteil von mindestens 80 Gew.-% bezogen auf die jeweilige Folienschicht aufweisen.

Das klebstofffreie Kunststoffrezyklat ist bevorzugt ein Rezyklat auf Basis von Polyethylen oder Polypropylen (PE-Rezyklat oder PP-Rezyklat). Alternativ oder zusätzlich weisen alle Folienschichten zusätzlich Primärpolyethylen oder Primärpolypropylen (Polyethylen oder Polypropylen als und/oder in Form von Primärkunststoff) auf, bevorzugt in Mengen im Bereich von 0,1 Gew.-% bis 15 Gew.-%, insbesondere in Mengen im Bereich von 0,5 Gew.% bis 10 Gew.-%, vorzugsweise in Mengen im Bereich von 1 Gew.-% bis 9 Gew.-%, bezogen auf die jeweilige Folienschicht. Derartige Zusammensetzungen bieten den Vorteil, dass diese eine einfache Wiederverwendbarkeit ermöglichen.

Nach einer bevorzugten Ausführungsform der Kunststofffolie weisen mindestens zwei der Folienschichten jeweils unterschiedliche Färbungen auf; und/oder mindestens zwei der Folienschichten weisen bevorzugt unterschiedliche, insbesondere die zuvor beschriebenen Inhaltsstoffe, auf.

Bevorzugt ist es durch die Ausbildung der erfindungsgemäßen Kunststofffolien in Form eines Schichtverbundes, dass die beiden Außenseiten unterschiedlich eingefärbt sind, was abhängig von der gewünschten Anwendung bzw. Verwendung vorteilhaft ist.

Auch ist es erfindungsgemäß möglich und bevorzugt, die beiden Außenseiten mit unterschiedlichen Oberflächeneigenschaften, z. B. Rauhigkeiten oder Polarität auszurüsten (um z. B. Bedruckbarkeit an einer Außenseite und einen Antihaftschutz an der anderen Außenseite zu ermöglichen oder dergleichen). Dies kann beispielsweise durch eine Coronabehandlung erfolgen.

Darüber wurde festgestellt, dass durch den mehrschichtigen Aufbau, insbesondere mit unterschiedlichen Eigenschaften und/oder unterschiedlichen weiteren Inhaltsstoffen bzw. Additiven in den jeweiligen einzelnen Schichten, eine verbesserte Unterdrückung von unerwünschter Migration der Inhaltsstoffe (z. B. von UV-Stabilisatoren) oder von Verunreinigungen möglich ist.

So können die unterschiedlichen Schichten der mehrschichtig ausgebildeten erfindungsgemäßen Kunststofffolie - obwohl die einzelnen Schichten jeweils auf einer gleichen Kunststoffrezyklatsorte basieren - mit unterschiedlichen Eigenschaften ausgerüstet werden. Durch die unterschiedlichen Eigenschaften der einzelnen Schichten der mehrschichtig ausgebildeten erfindungsgemäßen Kunststofffolie ist insgesamt eine Anpassbarkeit bzw. ein Maßschneidern der Gesamteigenschaften der mehrschichtigen Kunststofffolie (beispielsweise der optischen Eigenschaften durch Einfärbung und/oder Homogenisierung über den Folienverbund, oder mechanischen Eigenschaften, der Siegelfähigkeit bzw. Versiegelbarkeit etc.) möglich, da die einzelnen Schichten mit unterschiedlichen Eigenschaften (z. B. mit unterschiedlichen Dicken, unterschiedlichen Inhaltsstoffen, wie Additiven, Pigmenten etc.) ausgebildet werden können und die einzelnen Schichten auf diese Weise jeweils einen unterschiedlichen Beitrag innerhalb des Schichtverbundes leisten können.

Es wurde überraschend gefunden, dass sich eine Kunststofffolie auf Basis von aus Abfall stammendem Kunststoffrezyklat mit einem Kunstoffrezyklat-Anteil von vorzugsweise mindestens 80 Gew.-%, bezogen auf die Kunststofffolie und mindestens einer Innenschicht aus kleberbeschichteten Folienabfällen herstellen lässt, welche zumindest im Wesentlichen gleichwertige oder sogar verbesserte Eigenschaften (z. B. mechanische bzw. optische bzw. haptische etc. Eigenschaften) wie Kunststofffolien auf Basis von kleberfreiem Kunststoffrezyklat aufweist, sofern die Kunststofffolie mehrschichtig und aus koextrudierten, Folienschichten ausgebildet ist.

Es wurde insbesondere überraschend herausgefunden, dass unter diesen Voraussetzungen leistungsstarke Kunststofffolien trotz des sehr hohen kleberbeschichteten Kunststoffrezyklat-Anteils bereitgestellt werden können.

Die vorliegende Erfindung wird anhand der nachfolgenden Ausführungsbeispiele veranschaulicht, welche die vorliegende Erfindung jedoch keinesfalls beschränken sollen, sondern lediglich die beispielhafte und nichtlimitierende Durchführungsweise und Ausgestaltung der vorliegenden Erfindung erläutern sollen.

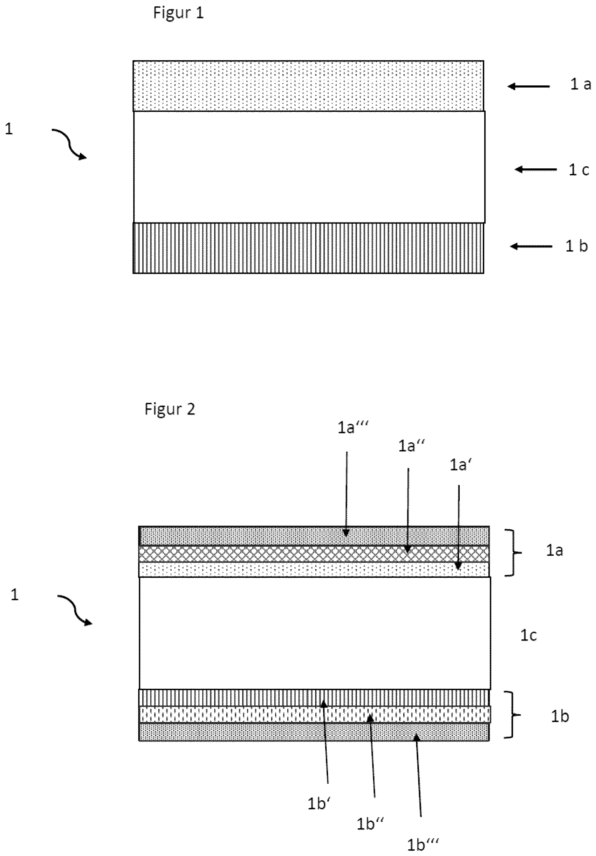

Es wurde eine 3-Schicht-koextrudierte Folie mit einer Kernschicht/Innenschicht 1c und zwei Außenschichten 1a und 1b nach dem beanspruchten Verfahren hergestellt, wobei jeweils eine Außenschicht 1a und 1b an die Innenschicht 1c angrenzt. Somit ergibt sich ein Schichtaufbau 1a - 1c - 1 b (siehe Figur 1). Das Verhältnis der Schichtdicken dieser Schichten beträgt 20:60:20.

Die Außenschichten 1a und 1b bestehen jeweils zu 90% aus einem PE Rezyklat sowie 5 % Kreide und 5 % Farbbatch, während die Innenschicht 1c zu 100% aus einem PE-Rezyklat enthaltend Naturkautschuk-Kleber hergestellt werden.

Als Vergleichsfolie wurde eine Folie mit dem beschriebenen Aufbau und Zusammensetzung, jedoch einer Innenschicht aus kleberfreiem PE-Material hergestellt.

Zur Charakterisierung der Folie wurden die mechanischen Eigenschaften, insbesondere die Zugfestigkeit in Längs- und Querrichtung, die Reißdehnung in Längs- und Querrichtung, die dynamische Durchstoßfestigkeit, die Siegelnahtfestigkeit sowie die Reibungskoeffizienten der hergestellten Folien getestet.

Die folgenden Testverfahren zur Messung der Eigenschaften verwendet:
Zugfestigkeit: Zugversuch gemäß DIN EN ISO 527-3
Reißdehnung: Zugversuch gemäß DIN EN ISO 527-3
Durchreiß-/Weiterreißwiderstand: Elmendorf gemäß ASTM D 1922
Dynamische Durchstoßfestigkeit: Dart-Drop Test gemäß ASTM D 1709
Siegelnahtfestigkeit: DIN 55529
Reibungskoeffizienten: Reibungsversuch gegen Metall gemäß DIN EN ISO 8295

**Tabelle 1**

| Produkt | | | M1 | M2 | M3 | M4 |
|---|---|---|---|---|---|---|
| Material | | | LDPE Rezyklat | LDPE Rezyklat mit Kleber | LDPE Rezyklat | LDPE Rezyklat mit Kleber |
| | Einheit | Norm | | | | |
| Foliendicke | µm | DIN EN ISO 8295 | 34 | 34 | 71 | 71 |
| Zugfestigkeit längs | N/mm2 | DIN EN ISO 527-3 | 24 | 21 | 23 | 24 |
| Zugfestigkeit quer | N/mm2 | DIN EN ISO 527-3 | 25 | 24 | 25 | 25 |
| Reißdehnung längs | % | DIN EN ISO 527-3 | 299 | 302 | 427 | 482 |
| Reißdehnung quer | % | DIN EN ISO 527-3 | 553 | 590 | 594 | 626 |
| Dart Drop | g/µm | ASTM 1709 | 2,5 | 3,4 | 2,9 | 4,0 |
| Siegelnahtfestigkeit | N/mm2 | DIN 55529 | 21,2 | 20,5 | 16,1 | 15,7 |
| Elmendorf längs | N/mm | ASTM 1922 | 37 | 36 | 41 | 48 |
| Elmendorf quer | N/mm | ASTM 1922 | 91 | 120 | 94 | 123 |
| COF_Met (außen) | | DIN EN ISO 8295 | 0,2 | 0,21 | 0,2 | 0,2 |
| COF_Met (innen) | | DIN EN ISO 8295 | 0,2 | 0,21 | 0,19 | 0,21 |

Besonders vorteilhaft ist es, dass die erfindungsgemäßen Kunststofffolien nach ihrer Verwendung wieder einer erneuten Rezyklierung unterzogen werden können bzw. in ein erneutes Rezyklierungsverfahren eingebracht werden können, um hieraus letztendlich wieder neues Kunststoffrezyklat zu gewinnen. Mit anderen Worten sind die erfindungsgemäßen Kunststofffolien selbst wieder recyclingfähig. Vorteilhafterweise kann somit vermieden werden, wertvolle Kunststoffe zu entsorgen.

Zudem wird durch die Verarbeitung von Flakes auf einen zusätzlichen Prozessschritt (Granulierung) verzichtet und somit Energie beim Herstellungsprozess eingespart werden.

Das erfindungsgemäße Verfahren basiert auf bereits bekannten Verfahren zur Herstellung von koextrudierten Cast- oder Blasfolien. Als wichtiger Prozessschritt hat sich dabei die Verwendung eines geeigneten Zerkleinerers herausgestellt. In diesem Prozessschritt wird sowohl die Größe der Folienpartikel als auch deren Verteilung festgelegt. Hierbei spielen die Eigenschaften des zu verarbeitenden Materials, wie z.B. Elastizität, Zähigkeit und Wärmeformbeständigkeit eine entscheidende Rolle. Bei kleberbeschichteten Folien stellt insbesondere die Klebrigkeit des verwendeten Materials eine besondere Schwierigkeit dar.

Bevorzugt ist die Verwendung eines Hochleistungszerkleinerers, um eine optimale Größe der Folienschnipsel aus dem Folienmaterial zu erhalten. Wesentlich beim Schreddern bzw. Zerkleinern der Folie zu Flocken ist, dass keine Verklumpung der Flocken durch eine zu hohe Arbeitstemperatur erfolgt. Diese ist in Abhängigkeit von dem jeweiligen Kleber und dessen Eigenschaften anzupassen.

Ein weiterer wesentlicher Aspekt des Verfahrens ist, die Verwendung eines Schmelzfilters mit kontinuierlicher Siebreinigung, insbesondere eines Rotationsschmelzfilter. Damit kann vorteilhafterweise mit erhöhter Sicherheit vermieden werden, dass durch Verwendung eines kleberhaltigen Rezyklats gegebene Verunreinigungen Störungen hervorrufen werden. Wobei die kontinuierliche Siebreinigung besonders vorteilhaft ist, da dadurch der Fertigungsprozess nicht unterbrochen werden muss.

Der Einsatz eines Doppelschneckenextruders ist bevorzugt, um die Flakes / Flocken optimal zu homogenisieren, da sonst die Gefahr von Betriebsstörungen gegeben ist.

Vorzugsweise wird beim Anfahren der Koextrusion diese derart gesteuert, dass am Anfang die Schmelze der beiden äußeren Schichten extrudiert wird und die Schmelze der zumindest einen Schicht zu einem späteren Zeitpunkt dazu geschaltet wird, so dass das klebstoffhaltige Material der Innenschicht nicht mit den Walzen der Vorrichtung zur Herstellung der Folie bzw. zu deren Weiterverarbeitung in Berührung kommt.

Die erfindungsgemäße mehrschichtige Kunststofffolie kann ansonsten universell verarbeitet werden, insbesondere kann die mehrschichtige Kunststofffolie als Flachfolie ausgebildet und verwendet werden und bei Bedarf beispielsweise zu Rollenware für den Transport und/oder die Verarbeitung, beispielsweise in der Verpackungsindustrie, aufgewickelt werden. Darüber hinaus kann die erfindungsgemäße mehrschichtige Kunststofffolie aber auch zu einer Halbschlauchfolie oder Schlauchfolie oder aber in Form von Beuteln, Tüten etc. verarbeitet bzw. ausgebildet werden.

Die Koextrusion einer Folie auf einer Blasfolienanlage umfasst im Allgemeinen die folgenden Schritte, wobei erfindungsgemäße vorgenannte Aspekte dabei berücksichtigt werden, um die erfindungsgemäße Kunststofffolie zu realisieren:
1. Materialzuführung,
2. Schmelzen und Homogenisieren: Das Material wird in einem Extruder geschmolzen und homogenisiert,
3. Schichtaufbau durch Zuführen eines mehrschichtigen Schmelzestrom in einem Extrusionskopf,
4. Extrusion,
5. Kühlung und Abzug, und
6. Nachbehandlung.

Ein beispielhaftes Blasfolienverfahren zum Herstellen einer erfindungsgemäßen Kunststofffolie, z.B. auf einer 3-Schicht-Blasfolienanlage, aus einem kleberbeschichteten Recyclingmaterial wird nachstehend beschrieben, wobei auch bei diesem Verfahren die zuvor genannten Aspekte berücksichtigt werden.

Die Blasfolienanlage verfügt über einen Doppelschneckenextruder zur Extrusion der Innenschicht, bevorzugt einen dichtkämmenden Gleichdralldoppelschneckenextruder zum Aufschmelzen und Homogenisieren des kleberbeschichteten Recyclingmaterials zu einer Schmelze und über 2 weitere Extruder für die Extrusion der Außenschichten aus Primärpolymer oder Rezyklaten. Die Extruder zur Extrusion der Außenschichten sind in der Regel Einschneckenextruder, wie sie für die Blasfolienextrusion üblich sind.

Die Extruder verfügen vorzugsweise über eine atmosphärische Entgasung als auch eine Unterdruck-Entgasungseinheit.

Die Extruder verfügen über eine Führung für einen Schmelzestrom über einen 3-Schicht-Coextrusions-Blaskopf zu einer Ringdüse zum Extrudieren eines Folienschlauches. Zwischen dem Extruder und dem Blaskopf ist eine Schmelzepumpe angeordnet, welche die Schmelze zum Blaskopf fördert. Durch diese Gestaltung muss ein Druck im Schmelzestrom nicht ausschließlich vom Extruder aufgebaut werden, sondern kann durch die Schmelzepumpe aufgebaut, und/oder erhöht werden. Die Schmelze wird von der Schmelzepumpe weiter in den Blaskopf gefördert, in dem auf diese spätere Folienmittelschicht mit den beiden Außenschichten aus den beiden äußeren Extrudern zusammengeführt und diese dreischichtige Schmelze zur Ringdüse geführt wird. Auf die Ringdüse folgt eine Schlauchbildungszone zum längs und quer ziehen des Schmelzeschlauches. Die Blasfolienanlage verfügt über ein Kühlmittel (insbesondere Luft) für den sich in Maschinenrichtung bewegenden Schmelzeschlauch. Das Kühlmittel wird in den Blasfolienschlauch eingeblasen bzw. angeblasen wird, wodurch die Schmelze abkühlt und der Schmelzeschlauch zum Folienschlauch wird. Jenseits der Schlauchbildungszone verfügt die Blasfolienanlage über eine Flachlegung zum Flachlegen des Folienschlauchs. Jenseits dieser Flachlegung ist ein Abzugswalzenpaar angeordnet, welches jenseits des Kühlmittels zum Abziehen des Folienschlauch vorgesehen ist.

In diesem Beispiel verfügt die Blasfolienanlage über einen Filter, welcher zwischen der Schmelzepumpe und dem Extruder angeordnet ist. Zwischen dem Filter und dem Extruder ist in diesem Ausführungsbeispiel eine Filterschmelzepumpe angeordnet.

Der Mittel-Extruder verfügt außerdem über eine Recyclingmaterialzuführung mit einer Stopfschnecke. Zudem verfügt die Blasfolienanlage erfindungsgemäß über einen Schredder, in welchen ein Ausgangsmaterial gespeist werden kann, welches zu dem Recyclingmaterial zerkleinert wird.

Das Ausgangsmaterial kann in Form von Bahnware, zerkleinerter Bahnware, geschredderter Folie usw. vorliegen. Der Schredder zerkleinert das Ausgangsmaterial in sog. Flakes.

Der Schredder verfügt über eine Transporteinrichtung, welche das geschredderte Recyclingmaterial zu einem Vorsilo fördert. Das Vorsilo ist über dem Lagersilo angeordnet und verfügt über eine Dosiereinrichtung, über welche das Recyclingmaterial bei Bedarf in das Lagersilo abgegeben werden kann. Das Lagersilo verfügt über ein Mittel zum Durchmischen des Recyclingmaterials, welches in diesem Ausführungsbeispiel als Rührwerk ausgebildet ist. Von dem Lagersilo wird das Recyclingmaterial über eine Förderschnecke in die Recyclingmaterialzuführung am Extruder geführt. Das Lagersilo kann über Mittel zur Bestimmung des Recyclingmaterialverbrauchs verfügen (z.B. Wiegeeinrichtung).

Die Recyclingmaterialzuführung ist dazu ausgebildet, neben dem Recyclingmaterial zusätzlich oder ersatzweise ein pelletiertes Recyclingmaterial aufzunehmen, um es zum Extruder zu fördern. Für diesen Zweck verfügt die Blasfolienanlage über eine Pellet-Dosiereinrichtung zum Vorhalten und Dosieren des pelletierten Materials. Bei dem pelletierten Material handelt es sich bevorzugt um Neuware und/oder höherwertiger Recyclate im Vergleich zu dem Recyclingmaterial.

Die Anlage umfasst weiterhin verschiedene Drucksensoren zur Erfassung des Schmelzedrucks im Schmelzestrom im Extrusionsverfahren sowie verschiedene Steuer- und Regeleinrichung. Dies ermöglicht ein konstantes Extrudieren von Recyclingmaterial.

Weiterhin sind ein oder mehrere Filter hinter dem Extruder vorgesehen, die den Schmelzestrom filtrieren und für den kontinuierlichen Betrieb durch eine Regelung der Reinigung ausgelegt sind.

Wie bereits ausgeführt, kann die erfindungsgemäße mehrschichtige Kunststofffolie auch eine universelle Verwendung finden als
- technische Folien, wie z.B. Kaschierfolien, Etikettenfolien und Trägerfolien,
- Agrarfolien, wie z.B. Silofolien, Unterziehfolien, Seitenwandfolien, Agrarstretchfolien, Gewächshausfolien, Spargelfolien, Torffolien und Netzersatzfolien,
- Stretchfolien, wie z.B. für leichte und schwere Packgüter in der Baustoff-, Holz-,Getränke- und Lebens- und Genussmittelindustrie und zur Ladungssicherung,
- Baufolien,
- Schutzfolien, wie z.B. für Platten und Profile, Teppiche, Edelstahl, Kunststoffe, lackierte Bleche und Glas, und
- Verpackungsfolien, insbesondere Getränke-, Hygiene-, Isolations-, Versand-, Transportverpackungen, als Staub- und Schmutzschutzfolien, Vlieskaschierfolien, Luftfrachtfolien oder Straffbanderolenfolien, und
als Verpackungsfolie im Non-Food-Bereich.

Nachstehend wird die Erfindung anhand von Figuren kurz erläutert. Es zeigt
- Fig. 1: in einer geschnittenen Ansicht eine erfindungsgemäße dreischichtige Kunststofffolie, und
- Fig. 2: in einer geschnittenen Ansicht eine erfindungsgemäße siebenschichtige Kunststofffolie.

In Figur 1 ist die erfindungsgemäße dreischichtige Kunststofffolie 1 in einer geschnittenen Ansicht dargestellt, wobei eine erste äußere Folienschicht 1a und eine zweite äußere Folienschicht 1b vorgesehen sind, zwischen den beiden äußeren Folienschichten 1a, 1b eine Innenschicht 1c angeordnet ist. Die Innenschicht 1c weist ein Kunststoffrezyklat aus kleberbeschichteten Folienmaterial auf, während die beiden äußeren Folienschicht 1a, 1b frei von kleberbeschichteten Folienmaterial ist. Durch diesen Aufbau der Kunststofffolie 1 können kleberbeschichtete Folienabfälle recycelt werden, da der üblicherweise eine Wiederverwendung derartiger Abfälle verhindernde Klebstoff im Inneren der Kunststofffolie 1 eingeschlossen ist.

Die in Figur 2 gezeigte siebenschichtige Kunststofffolie 1 ist eine mögliche Ausführungsform der erfindungsgemäßen Kunststofffolie 1, um die die gewünschten Eigenschaften der Kunststofffolie 1 gezielt einzustellen, indem jede Schicht eine spezifische Eigenschaft einbringt. So besteht die erste äußere Folienschicht 1a aus drei Schichten 1a', 1a", 1a‴ und die zweite äußere Folienschicht 2a aus drei Schichten 1b', 1b", 1b‴. Die jeweils drei Schichten 1a', 1a", 1a‴ und 1b', 1b", 1b‴ sind ebenfalls frei von kleberbeschichteten Folienmaterial. Die Innenschicht 1c ist in dieser Ausführungsform eine einzelne Schicht, wobei auch hier eine Mehrzahl von Innenschichten vorgesehen sein können.

### Bezugszeichenliste

- 1: Kunststofffolie
- 1a: erste äußere Folienschicht
- 1a': Schicht der ersten äußeren Folienschicht
- 1a": Schicht der ersten äußeren Folienschicht
- 1a"': Schicht der ersten äußeren Folienschicht
- 1b: zweite äußere Folienschicht
- 1b': Schicht der zweiten äußeren Folienschicht
- 1b": Schicht der zweiten äußeren Folienschicht
- 1b"': Schicht der zweiten äußeren Folienschicht
- 1c: Innenschicht

## Patentansprüche

1. Mehrschichtige Kunststofffolie, Kunststoffrezyklat aufweisend, wobei die Kunststofffolie (1) einen Schichtverbund von mindestens drei miteinander koextrudierten Folienschichten umfasst, wobei die Kunststofffolie (1) eine erste äußere Folienschicht (1a) und eine zweite äußere Folienschicht (1b) und mindestens eine zwischen der ersten äußeren Folienschicht (1a) und der zweiten äußeren Folienschicht (1b) angeordnete Innenschicht (1c) umfasst, wobei die mindestens eine Innenschicht (1c) ein Kunststoffrezyklat aus kleberbeschichtetem Folienmaterial aufweist.

2. Mehrschichtige Kunststofffolie gemäß Anspruch 1, wobei die erste äußere Folienschicht (1a) und die zweite äußere Folienschicht (1b) frei von Kunststoffrezyklat aus kleberbeschichteten Folienmaterial ist.

3. Mehrschichtige Kunststofffolie gemäß Anspruch 1, wobei die erste äußere Folienschicht (1a) und/oder die zweite äußere Folienschicht (1b) Kunststoffrezyklat aus kleberbeschichteten Folienmaterial enthält.

4. Mehrschichtige Kunststofffolie gemäß einem der Ansprüche 1 bis 3, wobei die erste äußere Folienschicht (1a) und die zweite äußere Folienschicht (1b) aus zumindest einem Primärkunststoff besteht oder enthält.

5. Mehrschichtige Kunststofffolie nach einem der vorhergehenden Ansprüche, wobei die erste äußere Folienschicht (1a) und/oder die zweite äußere Folienschicht (1b) aus jeweils zumindest zwei Folienschichten (1a', 1a", 1b', 1b") besteht oder bestehen

6. Mehrschichtige Kunststofffolie nach einem der vorhergehenden Ansprüche, wobei der Anteil des Klebers im Kunststoffrezyklat aus kleberbeschichteten Folienmaterial im Bereich von 0,5 Gew. % bis 55 Gew. %, vorzugsweise von 5 Gew. % bis 50 Gew. % liegt.

7. Mehrschichtige Kunststofffolie nach einem der vorhergehenden Ansprüche, wobei die Kunststofffolie (1) einen Kunststoffrezyklat-Anteil einschließlich des Kunststoffrezyklats aus kleberbeschichteten Folienmaterial von mindestens 80 Gew.-%, bevorzugt von 90 Gew.-% bezogen auf die Kunststofffolie (1), aufweist.

8. Mehrschichtige Kunststofffolie nach einem der vorhergehenden Ansprüche, wobei das Kunststoffrezyklat aus kleberbeschichteten Folienmaterial einen Klebstoff auf Basis von Naturkautschuk, Acrylat, Polyurethan, Silikon, natürliche oder biobasierte Klebstoffe, Klebstoffe auf Basis von Polyvinylacetat oder Vinylacetat-Ethylen, Hot-Melt-Kleberund/oder deren Mischungen aufweist.

9. Mehrschichtige Kunststofffolie nach Anspruch 7, wobei der Anteil des Kunststoffrezyklats aus kleberbeschichteten Folienmaterial an der Innenschicht bis zu 100 % beträgt.

10. Mehrschichtige Kunststofffolie nach einem der vorangehenden Ansprüche 1 bis 9, wobei die mindestens eine Innenschicht (1c) granuliertes Rezyklat, das Kunststoffrezyklat aus kleberbeschichteten Folienmaterial umfasst, aufweist, wobei optional ein Antihaftmittel enthalten sein kann.

11. Mehrschichtige Kunststofffolie nach einem der vorangehenden Ansprüche 1 bis 9, wobei die mindestens eine Innenschicht (1c) aus kleberbeschichtetem Folienmaterial in geschredderter Form als Flakes hergestellt ist.

12. Mehrschichtige Kunststofffolie nach einem der vorangehenden Ansprüche,
wobei die Kunststofffolie (1) aufweist oder hieraus besteht, wobei die nachfolgenden Gewichtsprozentangaben jeweils auf die Kunststofffolie (1) bezogen sind und derart zu kombinieren und/oder auszuwählen sind, dass 100 Gew.-% resultieren:
- Kunststoffrezyklat in Granulat-, Flake- oder Pulverform in Mengen im Bereich von 80 Gew.-% bis 99 Gew.-%,
- optional Primärkunststoff(e) der gleichen Kunststoffsorte im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%;
- Inhaltsstoffe, ausgewählt aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Hilfsstoffen und Additiven sowie deren Mischungen und Kombinationen, in Mengen im Bereich von 0,1 Gew.-% bis 20 Gew.%.

13. Mehrschichtige Kunststofffolie nach einem der vorangehenden Ansprüche,
wobei mindestens zwei der Folienschichten (1a, 1b, 1c) jeweils unterschiedliche Färbungen, aufweisen; und/oder
wobei mindestens zwei der Folienschichten (1a, 1b, 1c) jeweils unterschiedliche Inhaltsstoffe aufweisen.

14. Verfahren zur Herstellung einer mehrschichtigen Kunststofffolie nach einem der Ansprüche 1-13, wobei das kleberbeschichtete Folienmaterial geschreddert und anschließend in einem Doppelschneckenextruder geschmolzen und homogenisiert wird, und optional das Schreddern bei einer Temperatur durchgeführt wird, bei der kein Verkleben der Partikel erfolgt.

15. Verfahren nach Anspruch 14, wobei zur Reinigung der Schmelze ein Schmelzfilter mit kontinuierlicher Siebreinigung verwendet wird.

16. Verwendung einer mehrschichtigen Kunststofffolie gemäß einem der vorangehenden Ansprüche zur Herstellung von
technische Folien, wie z.B. Kaschierfolien, Etikettenfolien und Trägerfolien, Agrarfolien, wie z.B. Silofolien, Unterziehfolien, Seitenwandfolien, Agrarstretchfolien, Gewächshausfolien, Spargelfolien, Torffolien und Netzersatzfolien, Stretchfolien, wie z.B. für leichte und schwere Packgüter in der Baustoff-, Holz-,Getränke- und Lebens- und Genussmittelindustrie und zur Ladungssicherung, Baufolien,
Schutzfolien, wie z.B. für Platten und Profile, Teppiche, Edelstahl, Kunststoffe, lackierte Bleche und Glas, und
Verpackungsfolien, insbesondere Getränke-, Hygiene-, Isolations-, Versand-, Transportverpackungen, als Staub- und Schmutzschutzfolien, Vlieskaschierfolien, Luftfrachtfolien oder Straffbanderolenfolien, und
als Verpackungsmaterial im Nichtlebensmittelbereich (Non-Food-Bereich).
